# EUROPÄISCHE PATENTSCHRIFT

(11) **EP 0 607 235 B1**
(45) Veröffentlichungstag und Bekanntmachung des Hinweises auf die Patenterteilung: **10.04.2002**
(21) Anmeldenummer: 92921068.0
(22) Anmeldetag: 05.10.1992
(51) Int. Cl.: G01N 21/39

(54) **VERFAHREN UND VORRICHTUNG ZUR SPURENANALYTISCHEN KONZENTRATIONSBESTIMMUNG VON SICH IN EINEM TRÄGERGAS BEFINDENDEN MOLEKÜLEN**
METHOD AND DEVICE FOR DETERMINING TRACE CONCENTRATIONS OF MOLECULES IN A CARRIER GAS
PROCEDE ET DISPOSITIF POUR LA DETERMINATION DE LA CONCENTRATION, PAR ANALYSE DE TRACES, DE MOLECULES PRESENTES DANS UN GAZ PORTEUR

(30) Priorität: 11.10.1991 DE 4133701
(43) Veröffentlichungstag der Anmeldung: 27.07.1994
(73) Patentinhaber: GKSS-Forschungszentrum Geesthacht GmbH, W-2054 Geesthacht (DE)
(72) Erfinder: BAUERECKER, Sigund, D-2058 Schnakenbek (DE); CAMMENGA, Heiko, Karl, D-3300 Braunschweig (DE)
(74) Vertreter: Niedmers, Ole, Dipl.-Phys.
(86) Internationale Anmeldenummer: DE9200843
(87) Internationale Veröffentlichungsnummer: WO9307467

(56) Entgegenhaltungen:
- S. BAUERCKER ET AL. 'Durchfuehrbarkeitsstudie zur Technik der Spurenanalytischen Bestimmung von Acetaldehyd mit dem Diodenlaserspektrometer - ein Beitrag zur Waldschaden...' 30. Oktober 1991 , GKSS 91/E/69 GKSS-FORSCHUNGSZENTRUM GEESTHACHT GMBH , GEESTHACHT, BRD,
- JOURNAL OF MOLECULAR SPECTROSCOPY Bd. 133, 1989, ACADEMIC PRESS INC. Seiten 182 - 192 WILLEY D.R. ET AL. 'very low temperature spectroscopy: the helium pressure broadening coefficients below 4.3 K for the higher lying states of CH3F'

## Beschreibung

Die Erfindung betrifft ein Verfahren zur spurenanalytischen Konzentrationsbestimmung von sich in einem Trägergas befindenden Molekülen, insbesondere Molekülen mit vier und mehr Atomen, bei dem das aus Trägergas und den gasförmigen Molekülen zusammengesetzte Meßgas abgekühlt und spektroskopisch untersucht wird, sowie eine Vorrichtung zur Ausführung eines derartigen Verfahrens.

Ein Verfahren und eine Vorrichtung zur spurenanalytischen Konzentratiosbestimmung sind bekannt (S. Bauerecker et al. "Durchführbarkeitsstudie zur Technik der Spurenanalytischen Bestimmung von Acetaldehyd mit dem Diodenlaserspektrometer - ein Beitrag zur Waldschaden...", 30.10.1991, GKSS 91/E/69, GKSS-Forschungszentrum Geesthacht GmbH, Geesthacht, Bundesrepublik Deutschland).

Auf dem Gebiet der Umweltforschung und Umwelthygiene rücken neben den häufigen Schadstoffen auch vergleichsweise wenig konzentrierte Substanzen, die z. B. wegen ihrer hohen Giftigkeit infolge ihrer extremen luftchemischen Reaktivität oder als Indikator für bestimmte Belastungszustände von Bedeutung sind, in den Vordergrund des Interesses. Eine solche Stoffklasse sind auch die sogenannten Streßindikatoren, d. h. Substanzen, von denen vermutet wird, daß sie beispielsweise in der Waldschadensursachenforschung als direktes Maß für das Auftreten adverser Bedingungen dienen können, wenn ihre Messung mit vertretbarem Aufwand gelingen sollte.

Gegenwärtig lassen sich diese Stoffe wegen ihrer komplexen spektroskopischen Struktur und ihrer äußerst geringen Konzentration in normaler Umgebungsluft nur nach Vorkonzentration auf gaschromatographischem Wege erfassen. Sammlung, Vorbereitung, gaschromatographische Trennung und Identifikation können Stunden aber auch Tage in Anspruch nehmen und sind damit für viele praktische Anwendungen viel zu zeitraubend. Die Ergebnisse liegen daher erst lange nach dem Auftreten des schädigenden Ereignisses vor. Größere organische Moleküle der interessierenden Substanzen, d. h. Moleküle mit vier und mehr Atomen, haben in der Regel sehr komplexe Rotationsschwingungs-Spektren. Daher sind diese nur schwer durch absorptionsspektrometrische Methoden mittels durchstimmbaren Diodenlasern in der Gasphase nachzuweisen, insbesondere auch dann, wenn sie nur in geringen Spurenkonzentrationen vorliegen. Eine wesentliche Schwierigkeit des Nachweises in der Gasphase liegt darin, daß größere organische Moleküle über eine beträchtliche Vielzahl von Banden und Linien verfügen, die bei Normalbedingungen der Druck- und der Dopplerverbreiterung unterliegen mit dem Ergebnis, daß die einzelnen Linien zu einer wenig charakteristischen, für analytische Zwecke ungeeigneten Struktur ineinanderfließen.

Es ist Aufgabe der vorliegenden Erfindung, ein Verfahren und eine Vorrichtung zu schaffen, mit denen eine spurenanalytische Konzentrationsbestimmung größerer organischer Moleküle möglich ist, die in sehr geringen Spurenkonzentrationen vorliegen, wobei das Verfahren sehr schnell und mit großer Sicherheit durchgeführt werden kann und die Vorrichtung zur Durchführung eines derartigen Verfahrens einfach im Aufbau ist und problemlos reproduzierbare Ergebnisse zu liefern imstande ist und dabei an sich bekannte absorptionsspektrometrische Methoden angewendet werden können mit dem Ziel einer einfachen Ausgestaltung des Verfahrens und der Vorrichtung.

Gelöst wird die Aufgabe gemäß der Erfindung dadurch, daß ein Laserstrahl im wesentlichen koaxial zur Laserstrahlachse längs eines vorbestimmten Laserstrahllängenintervalls mit Meßgas strömend beaufschlagt wird und die Kühlung des Meßgases im wesentlichen längs des Laserstrahllängenintervalls erfolgt, wobei der Laserstrahl in Strahlengangrichtung nachfolgend einem Absorptionsspektrometer zugeführt wird.

Der wesentliche Vorteil des erfindungsgemäßen Verfahrens besteht darin, daß durch die gezielte Temperaturerniedrigung des Meßgases, das längs der Laserstrahlachse strömt und durch die gezielte Kühlung des Meßgases längs des Laserstrahllängenintervalls sich auf einfache Weise der Doppler-Anteil an der Linienbreite verringert und auch die Besetzungszahl solcher angeregten Molekülzustände, auf denen sich die sogenannten hot bands, das sind Anregungszustände aus angeregten Zuständen heraus. sich aufbauen, kleiner werden. Damit verringert sich neben der Linienbreite auch die Anzahl der möglichen Übergänge und die statistische Wahrscheinlichkeit für die einzelne Linie, womit sich die Empfindlichkeit des spektroskopischen Nachweises deutlich erhöhen läßt.

Vorteilhaft ist es auch, daß durch die Konzentrierung des Meßgases auf die Laserstrahlachse, die gewissermaßen eine Systemachse darstellt, annähernd alle interessierenden Spurengasmoleküle von dem konzentrierten Laserstrahl über das gesamte Laserstrahllängenintervall erfaßt werden. Dadurch ergibt sich eine sehr hohe Nachweiseffektivität.

Gemäß einer vorteilhaften Ausgestaltung des Verfahrens durchläuft der Laserstrahl durch Reflexion wenigstens zweimal das Laserstrahllängenintervall. Durch die Reflexion wird vorteilhafterweise der doppelte Absorptionsweg geschaffen, wodurch sich noch einmal eine Erhöhung der Nachweiseffektivität erreichen läßt und es ist möglich, das Verfahren derart über Kopf in einer Kammer auszuführen, daß nicht nur ein gasförmiges sondern auch ein flüssiges Kühlmittel verwendet werden kann.

Gemäß einer weiteren vorteilhaften Ausgestaltung des Verfahrens erfolgt die Kühlung des Meßgases und die Konzentration des Meßgases um die Laserstrahlachse und die Strömung des Meßgases im Laserstrahllängenintervall längs der Laserstrahlachse mittels eines radial zur Laserstrahlachse zugeführten gasförmigen Kühlmittels. Durch das dadurch erreichte Einhüllen des Meßgases mittels des gasförmigen Kühlmittels entlang der Laserstrahlachse bzw. der Systemachse kann eine sehr genaue, gezielte Kühlung des Meßgases bis weit unter seinen Siedepunkt erreicht werden, und es wird auf gezielte Weise verhindert, daß das Meßgas von der Laserstrahlachse im wesentlichen radial weg entweicht. Durch die gezielte und richtungsmäßig festgelegte Zufuhr des Kühlmittels wird ein Strömungsprofil um die Laserstrahlachse bzw. die Systemachse erzeugt, das rotationssymmetrisch um die Laserstrahlachse herum aufgebaut sein kann, wodurch das Meßgas bzw. die darin aufgenommenen zu analysierenden Moleküle auf den Laserstrahl durch Einbringung des Meßgases in die Kühlgasströmung sehr gezielt konzentriert werden können.

Grundsätzlich ist es möglich, als Kühlmittel gasförmige ggf. auch flüssige, vgl. oben, Inertgase zu verwenden. Es hat sich als vorteilhaft herausgestellt, als Kühlmittel gasförmiges, ggf. flüssiges Helium zu verwenden, grundsätzlich sind aber auch Wasserstoff oder Stickstoff geeignet.

Grundsätzlich ist es möglich, das Meßgas und das Kühlmittel nach Durchlaufen des Laserstrahllängenintervalls auf beliebige geeignete Weise abgeführt wird. Vorteilhaft ist es jedoch, das Meßgas und das Kühlmittel gezielt abzuführen und aufzufangen und zu trennen und ggf. wiederum in getrennter Form neu dem Verfahren zu unterwerfen.

Eine Vorrichtung zur spurenanalytischen Konzentrationsbestimmung von sich in einem Trägergas befindenden Molekülen, mit der auch das erfindungsgemäße Verfahren ausgeführt werden kann, ist dadurch gekennzeichnet, daß ein in eine Kammer einbringbarer Laserstrahl im wesentlichen koaxial zur Laserstrahlachse längs eines im wesentlichen durch die Kammerlänge bestimmten Laserstrahllängenintervalls mit über eine Öffnung in die Kammer einleitbarem Meßgas beaufschlagbar ist und der Teil der Kammer längs der Strömung des Meßgases längs des Laserstrahllängenintervalls mittels eines Kühlmittels kühlbar ist, wobei der Laserstrahl in Strahlengangrichtung nachfolgend aus der Kammer ausleitbar und einem Diodenlaser-Absorptionsspektrometer zuführbar ist.

Der wesentliche Vorteil der Vorrichtung, dessen Vorteile ebenfalls die oben im Zusammenhang mit dem Verfahren geschilderten Vorteile sind, liegt darüber hinaus noch darin, daß die Vorrichtung prinzipiell aufgrund ihres einfachen Aufbaus und ihrer verhältnismäßig leichten Adaptionsmöglichkeit jedem geeigneten Diodenlaser-Absorptionsspektrometer zugeordnet werden kann.

Das Absorbtionsspektrometer kann grundsätzlich ein beliebiges geeignetes Spektrometer sein, beispielsweise ein Diodenlaser-Absorbtionsspektrometer oder aber auch vorteilhafterweise ein Fourier-Transformationsspektrometer, wobei das Fourier-Transformations-Infrarot-Spektrometer vielfach einfacher handhabbar ist, als ein Diodenlaser Absorbtionsspektrometer und auch das gesamte Spektrum dort auf einmal ausgegeben wird und dieses somit auch sehr gut für die Spurengasanalytik nutzbar ist.

Bei einer vorteilhaften Ausgestaltung der Vorrichtung tritt der Laserstrahl über ein in der Kammer ausgebildetes optisch durchlässiges Fenster in den Kammerinnenraum ein. Dieses Fenster kann dabei vorteilhafterweise aus Salz, beispielsweise in Form von CaF₂ oder KBr bestehen.

Bei einer anderen vorteilhaften Ausgestaltung der Vorrichtung wird der eintretende Laserstrahl an einem im Kammerinnenraum ausgebildeten Spiegel reflektiert, der die Kammer unmittelbar benachbart zum Ort des Eintritts in die Kammer wieder verläßt, und zwar mit einem geringen Divergenzwinkel zwischen einfallendem und reflektiertem Laserstrahl. Durch die durch die Reflexion erreichbare, erhöhte Laserlichtabsorption kann die Nachweisempfindlichkeit erhöht werden. Es ist aber auch möglich, in der Kammer neben dem Eintrittsfenster auch ein dem Eintrittsfenster gegenüberliegendes gesondertes Austrittsfenster vorzusehen.

Bei einer weiteren vorteilhaften Ausgestaltung der Erfindung ist in der Kammer um den mit dem Meßgas beaufschlagten Laserstrahl herum und diesen längs des Kammerinnenraumes im wesentlichen radial einschließend ein Kühlmittelleitkörper angeordnet. Mit diesem Kühlmittelleitkörper wird, wenn dieser vorteilhafterweise eine Mehrzahl ihn in bezug auf die Laserstrahlachse radial durchquerender Öffnungen aufweist, das Meßgas in die Kühlgasströmung eingebracht, wenn durch die radialen Öffnungen im Kühlmittelleitkörper Kühlmittel von außen zugeführt wird. Das gasförmige Kühlmittel umschließt das Meßgas von der Innenwand des Kühlmittelleitkörpers auf die Kühlmittelleitkörperachse, die im wesentlichen identisch mit der Laserstrahlachse ist, hin, so daß das Meßgas nicht von der Innenwand des Kühlmittelleitkörpers adsorbiert werden kann.

Anstelle der den Kühlmittelleitkörper radial durchquerenden Öffnungen kann bei anderen vorteilhaften Ausgestaltung der Vorrichtung der den Kühlmittelleitkörper bildende Werkstoff kühlmitteldurchlässig porös ausgebildet sein, wodurch prinzipiell die gleichen Wirkungen, nämlich die gezielte Umschließung des Meßgases bzw. Einbringung des Meßgases in die Strömung des Kühlmittels erreicht wird.

Weist der Kühlmittelkörper Öffnungen auf, haben diese vorteilhafterweise einen Durchmesser im Bereich von 0,5 mm bis 3 mm, wobei die Dichte der Öffnungen im Kühlmittelkörper variabel gestaltet werden kann, um einen bestmöglichen Einhüll- und Kühleffekt zu erreichen.

Um das Kühlmittel nach seinem Durchtritt durch dem Kühlmittelkörper in dessen Innenraum vorteilhafterweise in Rotation versetzen zu können, ist es vorteilhaft, die Achsen der Öffnungen sehnenartig in den Innenraum des Kühlmittelkörpers hineinragen zu lassen, wobei die Rotation des Kühlmittels einen stabilisierenden Effekt auf die Meßgassäule in der Kühlmittelstromachse hat.

Es kann aber auch vorteilhaft sein, im Innenraum des Kühlmittelkörpers Elemente, beispielsweise Flügelelemente, anzuordnen , mit denen das in den Innenraum eintretende Kühlmittel in Rotation um die Laserstrahlachse versetzbar ist, wobei diese und die vorgenannte Maßnahme auch sinnvoll miteinander kombiniert werden können.

Um die Temperatur zum Erhalt guter Meßergebnisse noch einmal weiterverringern zu können, ist der Kühlmittelkörper vorteilhafterweise mit flüssigem Helium zusätzlich kühlbar, d. h. der Kühlmittelkörper wird noch durch einen zusätzlichen Strahlungsschild ummantelt.

Vorteilhaft ist es, das Kühlmittel über einen in der Kammer ausgebildeten Einlaß, der ggf. heizbar ausgebildet sein kann, in den Kammerinnenraum einzubringen. Der Einlaß kann ggf. durch von außen betätigbare Ventilanordnungen zur Erreichung vorbestimmter Meßgasmengen, die in die Kammer eintreten sollen, geeignet fernsteuerbar betätigt werden.

Vorteilhafterweise weist die Kammer im Bereich des Austritts oder der Reflexion des Laserstrahls wenigstens eine Öffnung zum Austritt des Gemisches aus Meßgas und Kühlmittel auf, wobei die Öffnung für den Austritt des Gemisches aus Meßgas und Kühlmittel vorzugsweise in der Mitte eines Spiegels, falls vorhanden, ausgebildet ist. Es ist aber auch möglich, eine Mehrzahl von Austrittsöffnungen, die auf einem Kreis ausgebildet sind, vorzusehen, wobei dann der Laserstrahl um einen Mittelpunkt des Kreises, der auf einem Spiegel ausgebildet ist, reflektiert wird.

Anstelle der einfachen Öffnungen zum Austritt des Gemisches aus Meßgas und Kühlmittel kann vorteilhafterweise die Kammer im Bereich des Austritts oder der Reflexion des Laserstrahls ein torusförmig ausgebildetes, im Querschnitt rohrförmiges Element aufweisen, das an der Innenseite der Torusöffnung eine Mehrzahl von Öffnungen zum Austritt des Gemisches aus Meßgas und Kühlmittel aufweist. Hierdurch wird das Meßgas und das Kühlmittel gleichmäßig radial von der Torusöffnung aus in den Torus eingesaugt und von dort nach außen abgeführt.

Zur Erfassung des Drucks sowie der Temperatur ist vorzugsweise der Kammerbereich unmittelbar benachbart zum mit Meßgas und Kühlmittel beaufschlagten Laserstrahl mit einem Temperatursensor und einem Drucksensor versehen, die auf geeignete Weise betrieben werden.

Bestandteil der Absorbtionsspektrometer, wie sie hier Verwendung finden, sind IR-Strahlungsdetektoren. Diese müssen grundsätzlich zu ihrer bestimmungsgemäßen Funktion gekühlt werden, was bisher separat geschehen mußte. Vorteilhafterweise werden zu einer Vereinfachung der Vorrichtung insgesamt die IR-Strahlungsdetektoren des Absorbtionsspektrometers in die Vorrichtung integriert und mit dieser selbst gekühlt.

Um sicherzustellen, daß die Mischungstemperatur aus Meßgas und Kühlmittel nicht wesentlich über der Kühlmitteltemperatur liegt und das Strömungsprofil um die Laserstrahlachse bzw. die Systemachse herum vom Kühlmittel bestimmt wird, ist es vorteilhaft, daß die die Kammer durchströmende Menge des Meßgases wenigstens 10-fach kleiner als die Menge des Kühlmittels ist.

Vorteilhafterweise liegt der Druck des Kühlmittels im Bereich von 1 bis 500 mbar und damit im Bereich der viskosen Strömung bei freien Weglängen bis über 10⁻² cm, da bei niedrigeren Drücken im Bereich zwischen Fein- und Hochvakuum die freien Weglängen sehr stark ansteigen und kein Strömungskontinuum mehr vorliegt.

Schließlich ist es vorteilhaft, die Kammer aus Metall auszubilden, was gleichfalls für den Kühlmittelleitkörper gilt. Als Werkstoff eignen sich insbesondere Edelstahl oder Kupfer, und zwar wegen ihrer guten Wärmeleitfähigkeit, was für eine homogene Temperaturverteilung wichtig ist.

Schließlich kann vorzugsweise das Metall des Kühlmittelleitkörpers gesintertes Metall sein, wobei dann durch die Poren des Sintermetalls das Kühlmittel wie durch die radialen Öffnungen den Kühlmittelleitkörper auf die Laserstrahlachse bzw. das Meßgas zu durchströmen kann.

Die Erfindung wird nun unter Bezugnahme auf die nachfolgenden schematischen Zeichnungen anhand eines Ausführungsbeispiels eingehend beschrieben. Diese zeigen:
- Fig. 1: im Querschnitt eine Vorrichtung, bei dem der einfallende Laserstrahl an einem Spiegel reflektiert wird und durch das Eintrittsfenster wiederum austritt,
- Fig. 2 a: eine erste Ausführungsform eines Spiegels, an dem der Laserstrahl im Kammerinnenraum reflektiert wird,

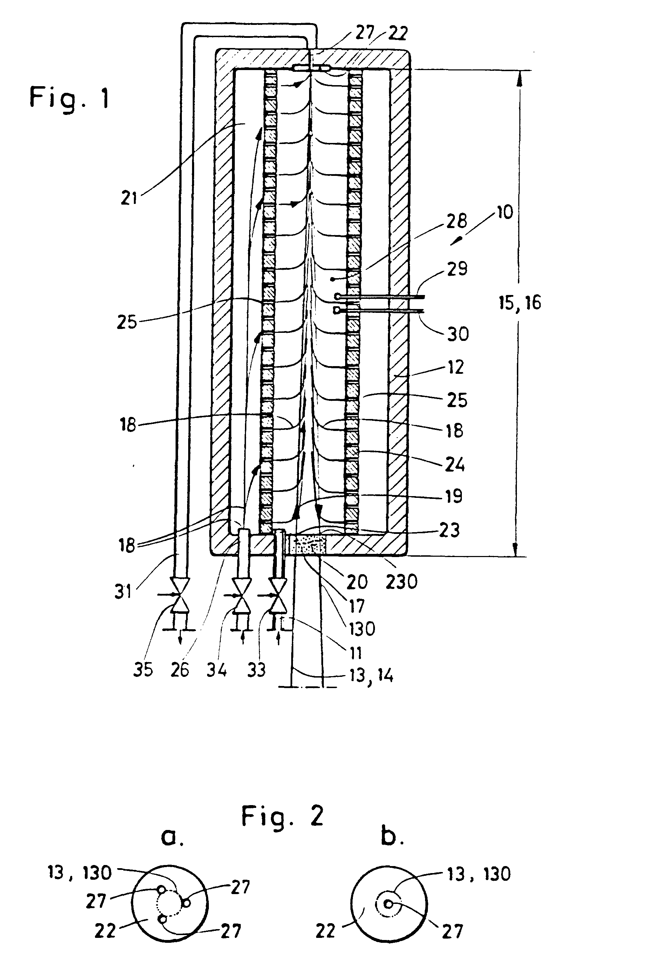

- Fig. 2 b: eine andere Ausführung des Spiegels, an dem der Laserstrahl im Kammerinnenraum reflektiert wird, mit lediglich einer Meßgas-/Kühlmittelaustrittsöffnung, und

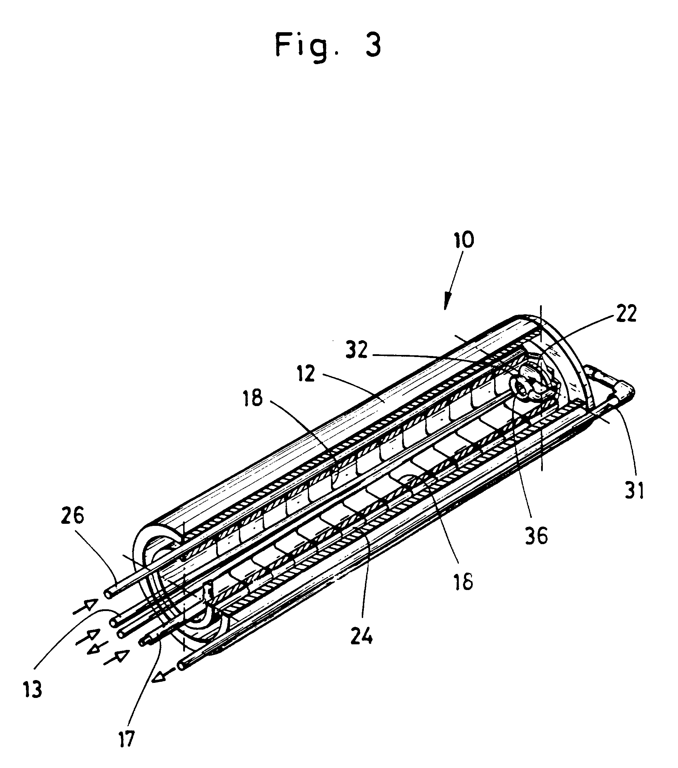

- Fig. 3: in perspektivischer, teilweise geschnittener Darstellung die Vorrichtung, versehen mit einem torusförmigen Element zur Abfuhr des Gemisches aus Meßgas und Kühlmittel

Die Vorrichtung 10 besteht im wesentlichen aus einer allseits geschlossenen Kammer 12 aus Metall, vorzugsweise Edelstahl oder Kupfer, und weist bei dem hier dargestellten Ausführungsbeispiel einen im wesentlichen kreisförmigen Querschnitt auf, bildet also im wesentlichen einen Zylinder. Koaxial zur Zylinderachse der Kammer 12 ist ein Kühlmittelleitkörper 24 angeordnet, der ebenfalls vorzugsweise aus Metall wie Edelstahl oder Kupfer besteht. Der Kühlmittelleitkörper 24 ist ebenfalls bei der hier dargestellten Ausführungsform im Querschnitt kreisförmig ausgebildet und bildet somit einen Zylinder.

Im Bodenbereich der Kammer ist eine Meßgasöffnung 17 für die Zufuhr von Meßgas 11 in den Innenraum des Kühlmittelleitkörpers 24 hinein angeordnet und ein Kühlmitteleinlaß 26, über den Kühlmittel 18 in einen Bereich um den Kühlmittelleitkörper 24 außen herum, d. h. in einen Kammerinnenraum 21 hinein, der bei dem in der Figur dargestellten Ausgestaltung zwischen Kühlmittelleitkörper und Kammerinnenwand gebildet wird, geleitet wird. Der Kühlmittelleitkörper 24 weist eine Mehrzahl ihn in bezug auf die Kammerachse, die im wesentlichen identisch mit einer Laserstrahlachse 14 ist, auf die noch weiter unten eingegangen wird, radial durchquerende Öffnungen 25 auf. Diese Öffnungen 25 dienen der Durchführung von Kühlmittel 18, worauf im einzelnen ebenfalls noch weiter unten eingegangen wird.

Am oberen Ende des Kammerinnenraums 21 im wesentlichen orthogonal zur Kammerachse ist ein Spiegel 22 angeordnet, vgl. auch Fig. 2 a und b, der wenigstens eine Meßgas-/Kühlmittelaustrittsöffnung 27 aufweist. Das Gemisch aus Meßgas 11 und Kühlmittel 18 verläßt die Kammer 12 durch die Meßgas-/Kühlmittelaustrittsöffnung 27 und wird über eine Rohrleitung 31 gezielt abgeführt und mittels hier nicht gesondert dargestellter Einrichtungen aufgefangen. Die Rohrleitung 31, die Zuführung des Meßgases 11 zur Kammer 12 und die Zuführung des Kühlmittels 18 sind über Ventileinrichtungen 33, 34, 35 regel- und ggf. fernsteuerbar.

Der Kammerbereich 28, der unmittelbar benachbart zur Achse der Kammer 12 im Innenraum des Kühlmittelleitkörpers 24 angeordnet ist, ist mit einem von der Vorrichtung 10 von außen dahin hineinragenden Temperatursensor 29 und einem Drucksensor 30 versehen. Die Temperatur und der Druck im Innenraum des Kühlmittelleitkörpers 24 können somit von außen erfaßt werden.

Am Boden der Kammer 12 und im wesentlichen orthogonal zur Kammerachse ist ein optisch durchlässiges Fenster, beispielsweise aus Salz, ausgebildet.

Ein von einem hier nicht gesondert dargestellten durchstimmbaren Diodenlaser-Absorptionsspektrometer zugeführter Laserstrahl 13 tritt durch das Fenster 20 in den Innenraum der Kammer 12 bzw. in den Innenraum des Kühlmittelleitkörpers 24 in Strahlengangrichtung 10 ein. Dabei ist der Laserstrahl 13 derart ausgerichtet, daß er gegenüber der Kammerachse einen sehr kleinen Winkel bildet, so daß von einer annähernd axialen Ausrichtung der Kammerachse und der Laserstrahlachse 14 gesprochen werden kann. Der Laserstrahl wird am Spiegel 22 reflektiert und tritt als reflektierter Laserstrahl 130 aus dem Fenster 20 wieder aus und wird dem Diodenlaser-Absorptionsspektrometer oder einem Fourier-Transformations-Infrarot-Spektrometer auf geeignete Weise zur Auswertung zugeführt. Ein Meßgas 11, das aus einem Trägergas und den zu bestimmenden gasförmigen Molekülen, die spurenanalytisch untersucht werden sollen, besteht, wird über Ventil 33 und die Meßgasöffnung 17 in den Innenraum des Kühlmittelleitkörpers 24 geführt. Gleichzeitig wird Kühlmittel 18, das gasförmig sein kann, in den Kammerinnenraum 21 zwischen Kammer 12 und Kühlmittelleitkörper 24 über Ventil 34 und den Kühlmitteleinlaß 26 eingeleitet. Das gasförmige Kühlmittel 18 strömt durch die im Kühlmittelleitkörper 24 ausgebildeten, diesen radial durchquerenden Öffnungen 25 auf die Kammerachse bzw. die Laserstrahlachse 14 zu. Somit wird der Laserstrahl im Innenraum des Kühlmittelleitkörper 24 im wesentlichen koaxial zur Laserstrahlachse 14 längs des durch die Kammerlänge 15 bestimmten Laserstrahllängenintervalls 16 mit Meßgas strömend beaufschlagt, wobei die Kühlung des Meßgases 11 durch das Kühlmittel 18 längs des Laserstrahllängenintervalls 16 erfolgt. Das Meßgas 11 wird durch das radial zuströmende Kühlmittel 18 von der Innenwand des zylindrisch ausgebildeten Kühlmittelleitkörpers 24 her auf die Kammerachse bzw. Laserstrahlachse 14 hin umschlossen, so daß das Meßgas nicht an der Innenwand des Kühlmittelleitkörpers 24 adsorbieren kann. Die Strömungsgeschwindigkeit des Meßgases 11 und des das Meßgas 11 umhüllenden hier gasförmigen Kühlmittels 18 liegt in der Nähe der Kammerachse bzw. Laserstrahlachse 14 größenordnungsmäßig bei ca. 0,01 bis 1 ms⁻¹ und wird mit den Meßzeiten des nicht dargestellten Diodenlaser-Absorptionsspektrometers koordiniert. Bei diesen Geschwindigkeiten ist zum einen der durch die Strömungsbewegung des Meßgases 11 bzw. des hier gasförmigen Kühlmittels 18 verursachte Dopplereffekt im Hinblick auf eine Linienverbreiterung zu vernachlässigen und es wird eine laminare Strömung im Innenraum des Kühlmittelleitkörpers sichergestellt.

Durch die Reflexion des einfallenden Laserstrahls 13 am Spiegel 22 wird durch den zusätzlich den Innenraum des Kühlmittelleitkörpers 24 durchlaufenden reflektierten Laserstrahl 130 die Nachweisempfindlichkeit der Vorrichtung erhöht. Zusätzlich oder alternativ kann auch eine Mehrfachreflexionszelle, beispielsweise eine Herriot-Zelle Anwendung finden.

Das Gemisch aus Meßgas 11 und Kühlmittel 18 tritt nach Durchlaufen des Laserstrahllängenintervalls 16 aus der Meßgas-/Kühlmittelaustrittsöffnung aus und wird über die Rohrleitung 31 zu hier nicht gesondert dargestellten Auffangeinrichtungen geleitet.

Die ganze Vorrichtung kann mit dem Ende, an dem sich der Spiegel befindet, nach unten in ein mit Stickstoff oder anderen Kühlmittel gefülltes Dewar-Gefäß gestellt werden.

### Bezugszeichenliste

- 10: Vorrichtung
- 11: Meßgas
- 12: Kammer
- 13: Laserstrahl
- 130: reflektierter Laserstrahl
- 14: Laserstrahlachse
- 15: Kammerlänge
- 16: Laserstrahllängenintervall
- 17: Meßgasöffnung
- 18: Kühlmittel
- 19: Strahlengangrichtung
- 20: Fenster
- 21: Kammerinnenraum
- 22: Spiegel
- 23: Eintrittsort
- 230: Austrittsort
- 24: Kühlmittelleitkörper
- 25: Öffnung
- 26: Kühlmitteleinlaß
- 27: Meßgas-/Kühlmittelaustrittsöffnung
- 28: Kammerbereich
- 29: Temperatursensor
- 30: Drucksensor
- 31: Rohrleitung
- 32: torusförmiges Element
- 33: Ventil
- 34: Ventil
- 35: Ventil
- 36: Torusöffnung

## Patentansprüche

1. Verfahren zur spurenanalytischen Konzentrationsbestimmung von sich in einem Trägergas befindenden Molekülen, insbesondere Molekülen mit vier und mehr Atomen, bei dem das aus Trägergas und den gasförmigen Molekülen zusammengesetzte Meßgas abgekühlt und spektroskopisch untersucht wird, **dadurch gekennzeichnet, daß** ein Laserstrahl im wesentlichen koaxial zur Laserstrahlachse längs eines vorbestimmten Laserstrahllängenintervalls mit Meßgasströmen beaufschlagt wird und die Kühlung des Meßgases im wesentlichen längs des Laserstrahllängenintervalls erfolgt, wobei der Laserstrahl in Strahlengangrichtung nachfolgend einem Absorptionsspektrometer zugeführt wird.

2. Verfahren nach Anspruch 1, **dadurch gekennzeichnet, daß** der Laserstrahl durch Reflexion wenigstens zweimal das Laserstrahllängenintervall durchläuft.

3. Verfahren nach einem oder beiden der Ansprüche 1 oder 2, **dadurch gekennzeichnet, daß** die Kühlung des Meßgases und die Konzentrationen des Meßgases um die Laserstrahlachse und die Strömung des Meßgases im Laserstrahllängenintervall längs der Laserstrahlachse mittels eines radial zur Laserstrahlachse zugeführten gasförmigen Kühlmittels erfolgt.

4. Verfahren nach Anspruch 3, **dadurch gekennzeichnet, daß** das Kühlmittel Stickstoff ist.

5. Verfahren nach einem oder beiden der Ansprüche 3 oder 4, **dadurch gekennzeichnet, daß** das Kühlmittel Helium ist.

6. Verfahren nach einem oder mehreren der Ansprüche 3 bis 5, **dadurch gekennzeichnet, daß** das Meßgas und das Kühlmittel nach Durchlaufen des Laserstrahllängenintervalls abgeführt wird.

7. Vorrichtung zur spurenanalytischen Konzentrationsbestimmung von sich in einem Trägergas befindenden Molekülen, insbesondere Molekülen mit vier oder mehr Atomen, bei der das aus einem Trägergas und den gasförmigen Molekülen zusammengesetzte Meßgas abgekühlt und mittels eines Absorptionsspektrometers spektroskopisch untersuchbar ist, **dadurch gekennzeichnet, daß** ein in eine Kammer (12) einbringbarer Laserstrahl (13) im wesentlichen koaxial zur Laserstrahlachse (14) längs eines im wesentlichen durch die Kammerlänge (15) bestimmten Laserstrahllängenintervalls (16) mit über eine Öffnung (17) in die Kammer (12) einleitbarem Meßgas (11) beaufschlagbar ist und der Teil der Kammer (12) längs der Strömung des Meßgases (11) längs des Laserstrahllängenintervall (16) mittels eines Kühlmittels (18) kühlbar ist, wobei der Laserstrahl (13) in Strahlengangrichtung (19) nachfolgend aus der Kammer (12) ausleitbar und einem Absorptionsspektrometer zuführbar ist.

8. Vorrichtung nach Anspruch 7, **dadurch gekennzeichnet, daß** das Absorbtionsspektrometer ein Diodenlaser-Absorbtionsspektrometer ist.

9. Vorrichtung nach einem oder beiden der Ansprüche 7 oder 8, **dadurch gekennzeichnet, daß** der Laserstrahl (13) über ein in der Kammer (12) ausgebildetes optisch durchlässiges Fenster (20) in den Kammerinnenraum (21) eintritt.

10. Vorrichtung nach einem oder beiden der Ansprüche 7 bis 9, **dadurch gekennzeichnet, daß** der eintretende Laserstrahl (13) an einem im Kammerinnenraum (21) ausgebildeten Spiegel (12) reflektiert wird und die Kammer (12) unmittelbar benachbart zum Ort des Eintritts (22) in die Kammer (12) wieder verläßt.

11. Vorrichtung nach einem oder mehreren der Ansprüche 7 bis 10, **dadurch gekennzeichnet, daß** in der Kammer (12) um den mit dem Meßgas (11) beaufschlagten Laserstrahl (13) herum und diesen längs des Kammerinnenraumes (21) radial einschließend ein Kühlmittelleitkörper (24) angeordnet ist.

12. Vorrichtung nach Anspruch 11, **dadurch gekennzeichnet, daß** der Kühlmittelleitkörper (24) eine Mehrzahl ihn in bezug auf die Laserstrahlachse (14) radial durchquerende Öffnungen (25) aufweist.

13. Vorrichtung nach einem oder beiden der Ansprüche 11 oder 12, **dadurch gekennzeichnet, daß** der den Kühlmittelleitkörper (24) bildende Werkstoff kühlmitteldurchlässig porös ausgebildet ist.

14. Vorrichtung nach Anspruch 12, **dadurch gekennzeichnet, daß** die Achsen der Öffnungen (25) sehnenartig in den im Innenraum des Kühlmittelkörpers (24) ausgebildeten Kammerbereich (29) hineinragen.

15. Vorrichtung nach einem oder mehreren der Ansprüche 11 bis 12, **dadurch gekennzeichnet, daß** im Innenraum des Kühlmittelkörpers (24) Elemente angeordnet sind, mit denen das in den Innenraum eintretende Kühlmittel (18) in Rotation um die Laserstrahlachse (14) versetzbar ist.

16. Vorrichtung nach einem oder mehreren der Ansprüche 7 bis 15, **dadurch gekennzeichnet, daß** der Kühlmittelkörper (24) mit flüssigem Helium kühlbar ist.

17. Vorrichtung nach einem oder mehreren der Ansprüche 7 bis 16, **dadurch gekennzeichnet, daß** das Kühlmittel (18) über einen in der Kammer (12) ausgebildeten Einlaß (26) in den Kammerinnenraum (21) eingebbar ist.

18. Vorrichtung nach einem oder mehreren der Ansprüche 10 bis 17, **dadurch gekennzeichnet, daß** die Kammer (12) im Bereich des Austritts oder der Reflexion des Laserstrahls (13) wenigstens eine Öffnung (27) zum Austritt des Gemisches aus Meßgas (11) und Kühlmittel (18) aufweist.

19. Vorrichtung nach einem oder mehreren der Ansprüche 7 bis 18, **dadurch gekennzeichnet, daß** die Kammer (12) im Bereich des Austritts oder der Reflexion des Laserstrahls (13) ein torusförmig ausgebildetes, im Querschnitt rohrförmiges Element (32) aufweist, das an der Innenseite der Torusöffnung (36) eine Mehrzahl von Öffnungen (27) zur Abfuhr des Gemisches aus Meßgas (11) und Kühlmittel (18) aufweist.

20. Vorrichtung nach einem oder mehreren der Ansprüche 7 bis 19, **dadurch gekennzeichnet, daß** der Kammerbereich (28) unmittelbar benachbart zum mit Meßgas (11) und Kühlmittel (18) beaufschlagten Laserstrahl (13) mit einem Temperatursensor (29) und einem Drucksensor (30) versehen ist.

21. Vorrichtung nach einem oder mehreren der Ansprüche 7 bis 20, **dadurch gekennzeichnet, daß** die IR-Strahlungsdetektoren des Absorbtionsspektrometers in die Vorrichtung (10) integriert werden und mit dieser selbst gekühlt werden.

22. Vorrichtung nach einem oder mehreren der Ansprüche 7 bis 21, **dadurch gekennzeichnet, daß** die die Kammer (12) durchströmende Menge des Meßgases (11) wenigstens 5- bis 10-fach kleiner als die Menge des Kühlmittels (18) ist.

23. Vorrichtung nach einem oder mehreren der Ansprüche 7 bis 22, **dadurch gekennzeichnet, daß** die Kammer (12) aus Metall besteht.

24. Vorrichtung nach einem oder mehreren der Ansprüche 11 bis 23, **dadurch gekennzeichnet, daß** der Kühlmittelleitkörper (24) aus Metall besteht.

25. Vorrichtung nach Anspruch 24, **dadurch gekennzeichnet, daß** das Metall gesintert ist.

## Claims

1. Method for the trace analytical determination of the concentration of molecules present in a carrier gas, in particular molecules with four and more atoms, in which the gas to be measured composed of carrier gas and the gaseous molecules is cooled down and examined spectroscopically, **characterized in that** streams of gas to be measured are admitted into a laser beam essentially coaxially relative to the laser beam axis along a predetermined laser beam length interval and the cooling of the gas to be measured takes place essentially along the length of the laser beam length interval, whereby the laser beam is afterwards brought into an absorption spectrometer in the direction of the beam path.

2. Method according to Claim 1, **characterized in that** the laser beam traverses the laser beam length interval at least twice by means of reflection.

3. Method according to one or both of the Claims 1 or 2, **characterized in that** the cooling of the gas to be measured and the concentrations of the gas to be measured around the laser beam axis and the flow of the gas to be measured in the laser beam length interval along the length of the laser beam axis takes place by means of a gaseous coolant fed in radially relative to the laser beam axis.

4. Method according to Claim 3, **characterized in that** the coolant is nitrogen.

5. Method according to one or both of the Claims 3 or 4, **characterized in that** the coolant is helium.

6. Method according to one or more of the Claims 3 to 5, **characterized in that** the gas to be measured and the coolant are withdrawn after passing through the laser beam length interval.

7. Apparatus for the trace analytical determination of the concentration of molecules present in a carrier gas, in particular molecules with four and more atoms, in which the gas to be measured composed of a carrier gas and the gaseous molecules is cooled down and examined spectroscopically by means of an absorption spectrometer, **characterized in that** a laser beam (13) that can be introduced into a chamber (12) can be exposed, essentially coaxially relative to the laser beam axis (14) along the length of a laser beam length interval (16) determined essentially by the chamber length (15), to a gas to be measured (11) that can be fed into the chamber (12) through an opening (17) and the part of the chamber (12) along the length of the flow of gas to be measured (11) along the length of the laser beam length interval (16) can be cooled by means of a coolant (18), whereby the laser beam (13) is afterwards capable of being withdrawn from the chamber (12) in the direction of the laser beam path (19) and can be passed into an absorption spectrometer.

8. Apparatus according to Claim 7, **characterized in that** the absorption spectrometer is a diode laser absorption spectrometer.

9. Apparatus according to one or both of the Claims 7 or 8, **characterized in that** the laser beam (13) enters the chamber interior (21) through an optically transparent window (20) constructed in the chamber (12).

10. Apparatus according to one or both of the Claims 7 to 9, **characterized in that** the incoming laser beam (13) is reflected at a mirror (12) constructed in the internal cavity (21) of the chamber and leaves the chamber (12) again immediately adjacent to the point of entry (22) into the chamber (12).

11. Apparatus according to one or more of the Claims 7 to 10, **characterized in that** a coolant guide member (24) is arranged in the chamber (12) around the laser beam (13) that is exposed to the gas being measured (11) and radially enclosing it (= the laser beam) along the length of the internal cavity (21) of the chamber.

12. Apparatus according to Claim 11, **characterized in that** the coolant guide member (24) has a plurality of openings (25) passing through it radially relative to the laser beam axis (14).

13. Apparatus according to one or both of the Claims 11 or 12, **characterized in that** the construction material forming the coolant guide member (24) is of coolant-permeable porous construction.

14. Apparatus according to Claim 12, **characterized in that** the axes of the openings (25) project in a chord-like manner into the chamber area (29) formed in the interior of the coolant member (24).

15. Apparatus according to one or more of the Claims 11 to 12, **characterized in that** elements with which the coolant entering the internal space (18) can be made to rotate around the laser beam axis (14) are arranged in the internal space of the coolant member (24).

16. Apparatus according to one or more of the claims 7 to 15, **characterized in that** the coolant member (24) can be cooled with liquid helium.

17. Apparatus according to one or more of the Claims 7 to 16, **characterized in that** the coolant (18) can be fed into the chamber interior space (21) through an inlet (26) constructed in the chamber (12).

18. Apparatus according to one or more of the Claims 10 to 17, **characterized in that** the chamber (12) has at least one opening (27) for the exit of the mixture of gas being measured (11) and coolant (18) in the area of the emergence or reflection of the laser beam (13).

19. Apparatus according to one or more of the Claims 7 to 18, **characterized in that**, in the region of the emergence or reflection of the laser beam (13), the chamber (12) has a torus-shaped element (32) of tubular cross-section which has on the inner side of the torus aperture (36) a plurality of apertures (27) for the removal of the mixture of gas being measured (11) and coolant (18).

20. Apparatus according to one or more of the Claims 7 to 19, **characterized in that** the chamber region (28) immediately adjacent to the laser beam (13) exposed to the gas being measured (11) and coolant (18) is equipped with a temperature sensor (29) and a pressure sensor (30).

21. Apparatus according to one or more of the Claims 7 to 20, **characterized in that** the IR radiation detectors of the absorption spectrometer are integrated into the apparatus (10) and are cooled down together with the latter itself.

22. Apparatus according to one or more of the Claims 7 to 21, **characterized in that** the amount of gas being measured (11) flowing through the chamber (12) is at least 5 to 10 times smaller than the quantity of coolant (18).

23. Apparatus according to one or more of the Claims 7 to 22, **characterized in that** the chamber (12) consists of metal.

24. Apparatus according to one or more of the Claims 11 to 23, **characterized in that** the coolant guide member (24) consists of metal.

25. Apparatus according to Claim 24, **characterized in that** the metal is sintered.

## Revendications

1. Procédé pour la détermination de la concentration par analyse de traces de molécules présentes dans un gaz porteur, en particulier de molécules avec quatre atomes et plus, dans lequel le gaz de mesure composé du gaz porteur et des molécules gazeuses est refroidi et analysé par spectroscopie, **caractérisé en ce qu'**un faisceau laser est sollicité avec des flux de gaz de mesure de façon sensiblement coaxiale par rapport à l'axe du faisceau laser le long d'un intervalle prédéfini de longueur de faisceau laser et le refroidissement du gaz de mesure s'effectue sensiblement le long de l'intervalle de longueur du faisceau laser, le faisceau laser étant amené ensuite à un spectromètre à absorption dans le sens de la trajectoire du faisceau.

2. Procédé selon la revendication 1, **caractérisé en ce que** le faisceau laser traverse par réflexion au moins deux fois l'intervalle de longueur de faisceau laser.

3. Procédé selon l'une quelconque des revendications 1 et 2 ou les deux, **caractérisé en ce que** le refroidissement du gaz de mesure et les concentrations du gaz de mesure se produisent autour de l'axe du faisceau laser et de l'écoulement du gaz de mesure dans l'intervalle de longueur de faisceau laser le long de l'axe du faisceau laser au moyen d'un réfrigérant gazeux amené radialement par rapport à l'axe du faisceau laser.

4. Procédé selon la revendication 3, **caractérisé en ce que** le réfrigérant est de l'azote.

5. Procédé selon l'une quelconque des revendications 3 et 4 ou les deux, **caractérisé en ce que** le réfrigérant est de l'hélium.

6. Procédé selon l'une quelconque ou plusieurs revendications 3 à 5, **caractérisé en ce que** le gaz de mesure et le réfrigérant sont évacués après la traversée de l'intervalle de longueur de faisceau laser.

7. Dispositif pour la détermination de la concentration par analyse de traces de molécules présentes dans un gaz porteur, en particulier de molécules avec quatre atomes ou plus, dans lequel le gaz de mesure composé d'un gaz porteur et des molécules gazeuses est refroidi et analysé au moyen d'un spectromètre à absorption, **caractérisé en ce qu'**un faisceau laser (13) pouvant être introduit dans une chambre (12) est sollicité avec du gaz de mesure (11) pouvant être entré par une ouverture (17) dans la chambre (12) de façon sensiblement coaxiale par rapport à l'axe du faisceau laser (14) le long d'un intervalle de longueur de faisceau laser (16) défini sensiblement par la longueur de chambre (15) et **en ce que** la partie de la chambre (12) peut être refroidie au moyen d'un agent réfrigérant (18) le long de l'écoulement du gaz de mesure (11) le long de l'intervalle de longueur de faisceau laser (16), le faisceau laser (13) pouvant être guidé ensuite hors de la chambre (12) dans le sens de la trajectoire du faisceau (19) et pouvant être amené à un spectromètre à absorption.

8. Dispositif selon la revendication 7, **caractérisé en ce que** le spectromètre à absorption est un spectromètre à absorption avec laser à diode.

9. Dispositif selon l'une quelconque des revendications 7 et 8 ou les deux, **caractérisé en ce que** le faisceau laser (13) entre dans l'espace intérieur de la chambre (21) par une fenêtre (20) optiquement transparente et aménagée dans la chambre (12).

10. Dispositif selon l'une quelconque ou deux des revendications 7 à 9, **caractérisé en ce que** le faisceau laser (13) entrant est réfléchi sur un miroir (12) formé dans l'espace intérieur de la chambre (21) et quitte à nouveau la chambre (12) à proximité immédiate de l'emplacement de l'entrée (22) dans la chambre (12).

11. Dispositif selon l'une quelconque ou plusieurs des revendications 7 à 10, **caractérisé en ce qu'**un corps conducteur réfrigérant (24) est disposé dans la chambre (12) autour du faisceau laser (13) sollicité avec le gaz de mesure (11) et incluant le faisceau radialement le long de l'espace intérieur de la chambre (21).

12. Dispositif selon la revendication 11, **caractérisé en ce que** le corps conducteur réfrigérant (24) présente une pluralité d'ouvertures (25) qui le traversent radialement par rapport à l'axe du faisceau laser (14)

13. Dispositif selon l'une quelconque des revendications 11 et 12 ou les deux, **caractérisé en ce que** le matériau formant le corps conducteur réfrigérant (24) est conçu poreux et perméable au réfrigérant.

14. Dispositif selon la revendication 12, **caractérisé en ce que** les axes des ouvertures (25) dépassent à la façon de ligaments dans la zone de chambre (29) conçue dans l'espace intérieur du corps réfrigérant (24).

15. Dispositif selon l'une quelconque des revendications 11 et 12 ou les deux, **caractérisé en ce que** dans l'espace intérieur du corps réfrigérant (24) sont disposés des éléments avec lesquels le réfrigérant (18) entrant dans l'espace intérieur peut être mis en rotation autour de l'axe du faisceau laser (14).

16. Dispositif selon l'une quelconque ou plusieurs des revendications 7 à 15, **caractérisé en ce que** le corps réfrigérant (24) peut être refroidi avec de l'hélium liquide.

17. Dispositif selon l'une quelconque ou plusieurs des revendications 7 à 16, **caractérisé en ce que** le réfrigérant (18) peut être introduit dans l'espace intérieur de la chambre (21) par une entrée (26) formée dans la chambre (12).

18. Dispositif selon l'une quelconque ou plusieurs des revendications 10 à 17, **caractérisé en ce que** la chambre (12) présente dans la zone de la sortie ou de la réflexion du faisceau laser (13) au moins une ouverture (27) pour la sortie du mélange composé de gaz de mesure (11) et de réfrigérant (18).

19. Dispositif selon l'une quelconque ou plusieurs des revendications 7 à 18, **caractérisé en ce que** la chambre (12) présente dans la zone de la sortie ou de la réflexion du faisceau laser (13) un élément (32) conçu en forme de tore et de forme tubulaire en section, qui présente sur le côté intérieur de l'ouverture du tore (36) une pluralité d'ouvertures (27) pour l'évacuation du mélange composé de gaz de mesure (11) et de réfrigérant (18).

20. Dispositif selon l'une quelconque ou plusieurs des revendications 7 à 19, **caractérisé en ce que** la zone de chambre (28) est pourvue d'un capteur de température (29) et d'un capteur de pression (30) à proximité immédiate du faisceau laser (13) sollicité avec du gaz de mesure (11) et du réfrigérant (18).

21. Dispositif selon l'une quelconque ou plusieurs des revendications 7 à 20, **caractérisé en ce que** les détecteurs de rayonnement infrarouge du spectromètre à absorption sont intégrés dans le dispositif (10) et sont refroidis avec ce dispositif même.

22. Dispositif selon l'une quelconque ou plusieurs des revendications 7 à 21, **caractérisé en ce que** la quantité traversant la chambre (12) du gaz de mesure (11) est au moins 5 à 10 fois inférieure à la quantité du réfrigérant (18).

23. Dispositif selon l'une quelconque ou plusieurs des revendications 7 à 22, **caractérisé en ce que** la chambre (12) est en métal.

24. Dispositif selon l'une quelconque ou plusieurs des revendications 11 à 23, **caractérisé en ce que** le corps conducteur réfrigérant (24) est en métal.

25. Dispositif selon la revendication 24, **caractérisé en ce que** le métal est fritté.
